# EUROPÄISCHE PATENTANMELDUNG

(11) **EP 3 232 135 A1**
(43) Veröffentlichungstag der Anmeldung: **18.10.2017**
(21) Anmeldenummer: 17157516.0
(22) Anmeldetag: 23.02.2017
(51) Int. Cl.: F24H 9/20, B29C 45/16, F23L 3/00, F23D 14/82, F16K 15/03

(54) **RÜCKSTRÖMSICHERUNGSVENTIL FÜR EIN GEBLÄSE EINER GASARMATUR**

(30) Priorität: 07.03.2016 DE 102016203628
(71) Anmelder: Vaillant GmbH, 42859 Remscheid (DE)
(72) Erfinder: Fischer, Christian, 42899 Remscheid (DE); Gevers, Hendrik, 50933 Köln (DE); Engel, Mira, 42929 Wermelskirchen (DE); Birker, Katja, 42349 Wuppertal (DE); Tomczak, Heinz-Jörg, 42327 Wuppertal (DE); Polus, Markus, 45327 Essen (DE)
(74) Vertreter: Hocker, Thomas

(57) **Zusammenfassung**

Die Erfindung betrifft ein Rückströmsicherungsventil 1 sowie ein Heizgerät mit einem Rückströmsicherungsventil. Das Heizgerät umfasst ein Gebläse 9, einen Brenner 11, der über einen Brenneranschluss 12 mit dem Gebläse verbunden ist, und das Rückströmsicherungsventil 1 mit einer Klappe 3 und einem Ventilkörper 2. Erfindungsgemäß ist der Ventilkörper 2 als Flansch ausgeführt ist, so dass er mittels einer unteren 8 und oberen Dichtfläche 7 zwischen dem Gebläseflansch 10 und dem Brenneranschlussflansch 12 dichtend verbunden ist..

## Beschreibung

Die Erfindung betrifft ein Rückströmsicherungsventil für ein Gebläse einer Gasarmatur sowie ein Heizgerät mit einem Rückströmsicherungsventil.

Gattungsgemäße Rückströmsicherungsventile werden eingesetzt, um bei Mehrfachbelegung von Heizgeräten an einem gemeinsamen Abgassystem ein Rückströmen von Abgasen zu verhindern. Es besteht stets das Problem, dass Abgase eines Gerätes in einem anderen an das Abgassystem angeschlossenen Gerät austreten können. Diese Gefahr besteht vorwiegend dann, wenn ein Heizungsgerät abgeschaltet ist und somit keinen Gegendruck aufbaut. Hierzu gibt es Rückströmsicherungsventile, welche eine Durchströmung des abgeschalteten Heizgeräts verhindern. Diese Rückströmsicherungsventile werden üblicherweise eingesetzt zwischen dem Gebläse, welches das Brenngas-Luft-Gemisch fördert und dem Brennraum, so dass die Rückströmsicherungsventil thermisch nicht belastet sind.

Nach dem Stand der Technik sind diese Rückströmsicherungsventile mehrteilig aufgebaut. Dies führt einen hohen Herstellungs- und Montageaufwand mit sich.

Aufgabe der vorliegenden Erfindung ist es, ein Rückströmsicherungsventil zu schaffen, welches einfach herzustellen ist, eine einfache Montage ermöglicht und zugleich ein sicheres Abdichten gewährleistet.

Erfindungsgemäß wird die Aufgabe gelöst, indem ein Schließkörper, welcher als bewegliche Klappe fungiert, durch ein Scharnier direkt am Flansch angebunden ist.

Um eine ausreichende Dichtwirkung zu erzielen, ist die Anlagefläche des Schließkörpers zum Gebläse hin mit einer bevorzugt im 2K-Spritzgussverfahren integrierten Dichtung versehen. Durch die direkte Anbindung an das Gebläse spart man sich ein zusätzliches Bauteil bzw. eine zusätzliche Schnittstelle um die Klappe aufzunehmen, welches sich positiv auf die Dichtheitsanforderungen auswirkt. Auch andere Dichtflächen können integriert sein, eingelegt sein oder durch den Flansch selbst gebildet sein.

Der Flansch erfüllt damit in einem Bauteil gleich vier Funktionen. Er verbindet das Gebläse mit der Brennertür, er dichtet das Gebläse gegen die Brennertür ab, er bildet das Scharnier für den Schließkörper und er dichtet den Schließkörper gegen den Flansch ab.

Die Erfindung wird nun anhand der Figuren detailliert erläutert.

Es stellen dar:
Figur 1: Das erfindungsgemäße Rückströmsicherungsventil mit Gebläse im Montagezustand mit dem Brenner,
Figur 2: das erfindungsgemäße Rückströmsicherungsventil aus Figur 1 nur mit Gebläse.

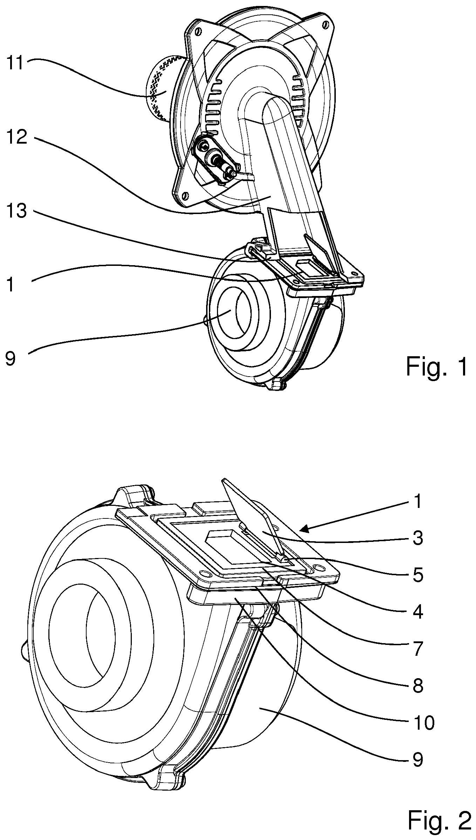

Figur 1 zeigt das erfindungsgemäße Rückströmsicherungsventil mit Gebläse im Montagezustand mit dem Brenner. Im Betrieb wird durch das Gebläse 9 ein Brenngas-Luft-Gemisch über den Brenneranschluss 12 dem Brenner 11 zugeführt. Um das Rückströmen von Abgasen bei einer Mehrfachbelegung von mehreren Brenner an einem Abgasstrang zu verhindern, ist auf dem Weg zwischen Gebläse 9 und Brenner 11 das Rückströmsicherungsventil 1 vorgesehen. Zur besseren Darstellung ist der Brenneranschluss 12 im Bereich des Rückströmsicherungsventils 1 in Figur 1 frei geschnitten. Der Brenneranschluss 12 weist einen Brenneranschlussflansch 13 auf, mit dem der Brenneranschluss 12 mit dem Rückströmsicherungsventil 1 und dem Gebläse 9 verbunden ist.

Figur 2 zeigt im Detail das auf dem Gebläse 9 montierte Rückströmsicherungsventil 1. Das Rückströmsicherungsventil 1 umfasst einem Schließkörper 3 in Form einer Klappe, der mit einem Scharnier 5 mit dem Flansch 2 verbunden ist. Bevorzugt ist das Scharnier in Form eines Festkörper-Scharniers ausgebildet, dass entweder aus dem gleichen Material wie Flansch 2 und Schließkörper 3 oder aus einem beim Spritzgießen eingelegten elastischen gebildet wird. Erfindungsgemäß bildet der Flansch 2 sowohl das abdichtende Gegenstück zu dem Schließkörper 3 als auch einen Flansch, der zwischen dem Gebläse Flansch 10 und dem Brenneranschlussflansch 13 in Figur 1 dichtend eingelegt ist. Dadurch ist einerseits eine einteilige Bauweise des Rückströmsicherungsventils 1 möglich, da die Verbindung zwischen dem Gebläseflansch 10 und dem Brenneranschlussflansch 13 ohnehin durch eine Dichtung vorgesehen werden muss. Diese Funktion kann und von dem Rückströmsicherungsventil 1 mit übernommen werden. Dadurch ist ein einfacher Aufbau und eine einfache Montage des Heizgeräts möglich. Darüber hinaus weist das Heizgerät mit dem erfindungsgemäßen Rückströmsicherungsventil eine Dichtfläche weniger auf, da nun der Ventil und der Flansch einstückig sind. Das Rückströmsicherungsventil umfasst mehrere Dichtflächen. Dies sind die Dichtfläche zwischen Schließkörper 3 und Flansch 2, die Dichtfläche zwischen Flansch 2 und Gebläseflansch 10 sowie die Dichtfläche zwischen Flansch 2 und Brenneranschlussflansch 13. Bevorzugt ist an der Dichtfläche zwischen Schließkörper 3 und Flansch 2 eine Dichtung 6 vorgesehen. Diese Dichtung kann als separate Dichtung eingelegt sein, besonders bevorzugt ist diese Dichtung jedoch im Rahmen eines Zweikomponenten-Spritzgussverfahrens einstückig mit dem Rückströmsicherungsventil 1 ausgeführt. Gleiches gilt für die obere Flanschdichtfläche 7 zwischen Flansch 2 und Gebläseflansch 10 sowie für die untere Flanschdichtfläche 8 zwischen Flansch 2 und Brenneranschlussflansch 13.

### Bezugszeichenliste

- 1: Rückströmsicherungsventil
- 2: Flansch, Ventilkörper
- 3: Schließkörper
- 4: Schließkörperdichtung
- 5: Scharnier
- 6: Dichtung
- 7: Obere Flanschdichtfläche
- 8: Untere Flanschdichtfläche
- 9: Gebläse
- 10: Gebläseflansch
- 11: Brenner
- 12: Brenneranschluss
- 13: Brenneranschlussflansch

## Patentansprüche

1. Rückströmsicherungsventil (1) für ein Gebläse (9) eines Heizgeräts, umfassend einen Ventilkörper (2) und einen als Klappe ausgeführten Schließkörper (3), wobei Ventilkörper 2 und Schließkörper (3) so zusammenwirken, dass im Betrieb durch ein Druckgefälle in einer Strömungsrichtung der Schließkörper (3) in eine Öffnungsstellung bewegbar ist und durch ein Druckgefälle entgegen der Strömungsrichtung der Schließkörper (3) in eine Öffnungsstellung bewegbar ist, **dadurch gekennzeichnet, dass** der Ventilkörper (2) als Flansch ausgeführt ist und eine untere Flanschfläche (6) und eine obere Flanschfläche (7) umfasst, wobei die untere Flanschfläche (6) unmittelbar mit einem Gebläseflansch (10) und die obere Flanschfläche (7) mit einem Brenneranschlussflansch (13) dichtend verbindbar ist.

2. Rückströmsicherungsventil nach Anspruch 1, **dadurch gekennzeichnet, dass** die untere Flanschfläche (6) und/oder die obere Flanschfläche (7) eine Dichtung umfassen, die einstückig in Form des Zweikomponenten-Spritzgussverfahrens mit dem Flansch (2) verbunden ist.

3. Heizgerät, umfassend ein Gebläse (9), einen Brenner (11), der über einen Brenneranschluss (12) mit dem Gebläse verbunden ist, und umfassend ein zwischen Gebläse (9) und Brenneranschluss (12) angeordnetes Rückströmsicherungsventil (1), wobei das Rückströmsicherungsventil (1) einen Ventilkörper (2) und einen als Klappe ausgeführten Schließkörper (3) umfasst, wobei Ventilkörper (2) und Schließkörper (3) so zusammenwirken, dass im Betrieb durch ein Druckgefälle in einer Förderrichtung des Gebläses (9) der Schließkörper (3) in eine Öffnungsstellung bewegbar ist und durch ein Druckgefälle entgegen der einer Förderrichtung des Gebläses (9) der Schließkörper (3) in eine Öffnungsstellung bewegbar ist, **dadurch gekennzeichnet, dass** der Ventilkörper (2) als Flansch ausgeführt ist und eine untere Flanschfläche (6) und eine obere Flanschfläche (7) umfasst, wobei die untere Flanschfläche (6) unmittelbar mit einem Gebläseflansch (10) des Gebläses (9) und die obere Flanschfläche (7) mit einem Brenneranschlussflansch (13) des Brenneranschlusses (12) dichtend verbunden ist.

4. Heizgerät nach Anspruch 2, **dadurch gekennzeichnet, dass** die untere Flanschfläche (6) und/oder die obere Flanschfläche (7) eine Dichtung umfassen, die einstückig in Form des Zweikomponenten-Spritzgussverfahrens mit dem Flansch (2) verbunden ist.
